# EUROPÄISCHE PATENTSCHRIFT

(11) **EP 2 023 015 B1**
(45) Veröffentlichungstag und Bekanntmachung des Hinweises auf die Patenterteilung: **22.07.2015**
(21) Anmeldenummer: 08009376.8
(22) Anmeldetag: 21.05.2008
(51) Int. Cl.: F16H 59/04, F16H 61/28

(54) **Äußere Schaltung für ein Schaltgetriebe und Verwendung dafür**
External shifting unit for a gearbox and application thereof
Dispositif extérieur de commande de changement de vitesse pour une transmission et son utilisation

(30) Priorität: 10.08.2007 DE 102007038044
(43) Veröffentlichungstag der Anmeldung: 11.02.2009
(73) Patentinhaber: GM Global Technology Operations LLC, Detroit, MI 48265-3000 (US)
(72) Erfinder: Bönning, Jörg, 64285 Darmstadt (DE)
(74) Vertreter: Strauss, Peter

(56) Entgegenhaltungen:
- DE-A1- 10 110 661
- DE-A1- 19 707 141
- FR-A- 981 297

## Beschreibung

Die vorliegende Erfindung betrifft eine äußere Schaltung für ein Schaltgetriebe in einem Kraftfahrzeug.

Ursprünglich war eine äußere Schaltung ein rein mechanischer Übertrager zwischen einem in der Fahrgastzelle des Fahrzeugs angeordneten Schalt-Wählhebel und dem Schaltgetriebe, der eine Bewegung des Schalt-Wählhebels kontinuierlich in eine Bewegung einer Schaltwelle o. dgl. im Inneren des Getriebes umsetzt. Ein über einen solchen mechanischen Übertrager geschaltetes Getriebe muss sorgfältig optimiert sein, um in einem weiten Bereich von Drehzahlen, Drehmomenten, Schaltgeschwindigkeiten etc. zuverlässig und sauber zu schalten.

Die DE 101 10 661 A1 offenbart ein Synchron-Automatikgetriebesteuersystem, das so ausgebildet ist, dass es die Zeit verkürzen kann, die für einen Gangwechselvorgang benötigt wird, ohne Zahnradgeräusche zu erzeugen, und ohne die Lebensdauer eines Synchronisiermechanismus zu beeinträchtigen. Eine auf einem Fahrzeug vorgesehene Brennkraftmaschine, ein mit der Brennkraftmaschine über eine Kupplung kuppelbarer Gangwechselmechanismus, ein Schaltungsauswahlbetätigungsglied zum selektiven Kuppeln einer Gruppe unter mehreren Gruppen von Gangwechselzahnrädern, die unterschiedliche Untersetzungsverhältnisse aufweisen, und zwischen einer Eingangswelle, die mit der Kupplung des Gangwechselmechanismus gekuppelt ist, und einer Ausgangswelle zum Antrieb des Fahrzeugs, und ein Steuergerät sind vorgesehen. Dem Steuergerät wird ein Ausgangssignal eines Schaltauswahlpositionssensors zugeführt, der eine ausgewählte Position des Schaltauswahlbetätigungsgliedes feststellt, um die Position des Schaltauswahlbetätigungsgliedes für einen Gangwechsel einzustellen, und die Kupplung in einen Zustand mit schwacher Kupplung in einen Zustand zu versetzen, in welchem kein Zahnrad zwischen die Eingangswelle und die Ausgangswelle im Verlauf eines Gangwechsels gekuppelt ist.

Die DE 10 228 707 A1 und die FR 981 297 offenbaren jeweils ein Automatikgetriebe. Die DE 197 07 141 A1 offenbart eine Anordnung zum Erfassen von Betätigungs- oder Schaltzuständen einer Getriebebetätigungsvorrichtung.

In den letzten Jahren sind zunehmend äußere Schaltungen entwickelt worden, bei denen eine elektronische Steuereinheit die Bewegung der Schaltwelle steuert. Eine solche so genannte Shift-by-Wire-Schaltung, wie z.B. aus DE 10 228 707 A1 bekannt, umfasst in herkömmlicher Weise einen in zwei Freiheitsgraden zwischen Endstellungen bewegbaren Schalt-Wählhebel, Messaufnehmer zum Erfassen einer Bewegung des Schalt-Wählhebels in jedem Freiheitsgrad, eine an die Messaufnehmer gekoppelte elektronische Steuereinheit sowie durch die Steuereinheit ansteuerbare Stellglieder zum Antreiben einer Schaltbewegung in dem Schaltgetriebe.

Die Messaufnehmer dieser herkömmlichen Schaltung sind ausgelegt, um eine Gangposition, d.h. die Tatsache, dass sich der Schalt-Wählhebel in einer einem bestimmten Gang entsprechenden Stellung befindet, und/oder eine Schaltabsicht zu detektieren. Im Falle der Bewegung des Schalt-Wählhebels entlang einer Schaltgasse bedeutet dies, dass ein zugeordneter Messaufnehmer zwar in der Lage sein muss, die jeweils einem eingelegten Gang entsprechenden Endstellungen von einer keinem Gang entsprechenden Zwischenstellung zu unterscheiden, dass er aber nicht in der Lage sein muss, zwischen verschiedenen Zwischenstellungen zu differenzieren. Zur Schaltabsichtserkennung kann als Messaufnehmer ein Kraftsensor Verwendung finden, der - ohne eine Information über eine aktuelle Stellung des Schalt-Wählhebels zu liefern - eine vom Fahrer auf ihn ausgeübte Schaltkraft anzeigt. Falls der Messaufnehmer als Bewegungssensor oder als Positionssensor ausgeführt ist, genügt es der Steuereinheit, ein eine Bewegung anzeigendes Signal vom Bewegungssensor zu empfangen bzw. die zeitliche Veränderung des Positionssignals auszuwerten, um die Schaltabsicht zu erkennen. Eine kontinuierliche Erfassung der Position ist nicht erforderlich. Indem die bekannte äußere Schaltung auf diese Weise lediglich Anfang und Ende eines Schaltvorgangs detektiert, kann die Steuereinheit zu einem gegebenen Zeitpunkt lediglich die Entscheidung treffen, dass ein Gang im Schaltgetriebe aus- oder eingelegt wird, nicht aber darüber, wie der Aus- und Einlegevorgang im Einzelnen abzulaufen hat. Die Steuerung des Aus- und Einlegens kann daher nur stets in einheitlicher Weise unter der Kontrolle der Steuereinheit erfolgen.

Da das Aus- und Einlegen der Gänge somit stets einheitlich, unter gleichen Randbedingungen, von statten geht, ist es relativ einfach, ein Schaltgetriebe so zu optimieren, dass das Aus- und Einlegen gleichmäßig und störungsfrei abläuft. Ein in dieser Weise optimiertes Schaltgetriebe ist jedoch nicht zwangsläufig geeignet, um auch manuell geschaltet zu werden, da bei manuellem Schalten Randbedingungen wie etwa die Geschwindigkeit der Schaltbewegung, Drehzahlen, bei denen jeweils ein Schaltvorgang durchgeführt wird, ein vor Beginn des Schaltvorgangs in Antriebsstrang des Kraftfahrzeugs herrschendes Drehmoment etc. stark variieren können. Insbesondere das vor Beginn eines Schaltvorgangs herrschende Drehmoment kann einen erheblichen Einfluss darauf haben, wie "glatt" ein Schaltvorgang abläuft. Wenn zu Beginn des Schaltvorgangs dieses Drehmoment nicht Null ist, unterliegt der gesamte Antriebsstrang einer Torsionsbelastung. Wenn in diesem Zustand eine Kupplung geöffnet wird, entspannen sich die torsionsbelasteten Teile, und es wird eine Schwingung im Antriebsstrang angeregt, die das Einlegen eines neuen Gangs erschweren kann. Ein geübter Fahrer kann diesen Effekten beim Schalten Rechnung tragen und dadurch schneller und flexibler schalten, als dies normalerweise mit einer elektronisch gesteuerten äußeren Schaltung möglich ist.

Die Optimierung eines manuell geschalteten Schaltgetriebes erweist sich in der Praxis als schwierig und aufwändig, da das Schaltgetriebe zum einen unter wesentlich stärker variablen Randbedingungen einwandfrei funktionieren muss als ein von einer elektronischen Steuereinheit geschaltetes Getriebe, und zum anderen es für einen Testfahrer sehr schwierig ist, Schaltvorgänge unter jeweils gleichen Randbedingungen reproduzierbar auszuführen und sie so einer systematischen Untersuchung zugänglich zu machen.

Eine Aufgabe der vorliegenden Erfindung ist, eine elektronisch gesteuerte äußere Schaltung für ein Schaltgetriebe anzugeben, die ein flexibles Schalten mit variabler Geschwindigkeit ermöglicht.

Eine zweite Aufgabe ist, eine äußere Schaltung für ein Schaltgetriebe anzugeben, die die Optimierung des Schaltgetriebes, insbesondere für manuelles Schalten, erleichtert.

Die erste Aufgabe wird erfindungsgemäß dadurch gelöst, dass bei einer äußeren Schaltung für ein Schaltgetriebe in einem Kraftfahrzeug mit einem in einem Schalt- und einem Wähl-Freiheitsgrad bewegbaren Schalt-Wählhebel, wobei Endstellungen des Schalt-Wählhebels in dem Schalt-Freiheitsgrad jeweils einem Gang des Schaltgetriebes entsprechen, mit Messaufnehmern zum Erfassen einer Bewegung des Schalt-Wählhebels in jedem Freiheitsgrad, einer an die Messaufnehmer gekoppelten elektronischen Steuereinheit und durch die Steuereinheit ansteuerbaren Getriebestellgliedern zum Antreiben einer Schaltbewegung in dem Schaltgetriebe die Steuereinheit eingerichtet ist, anhand von von den Messaufnehmern gelieferter, für die Stellung des Schalt-Wählhebels repräsentativer Stellungsinformation wenigstens in dem Schalt-Freiheitsgrad eine Vielzahl von Zwischenstellungen des Schalt-Wählhebels voneinander und von den Endstellungen zu unterscheiden und eine Sollposition der Getriebestellglieder jeweils entsprechend jeder Zwischenstellung festzulegen. Indem der Fahrer eine Schaltbewegung am Schalt-Wählhebel mit unterschiedlichen Geschwindigkeiten vornimmt, hat er die Möglichkeit, auch den Ablauf des Schaltvorgangs in dem Schaltgetriebe seinen Wünschen entsprechend zu steuern.

Die Steuerung ist umso feinfühliger möglich, je höher die Zahl der unterscheidbaren Zwischenstellungen ist. Im Idealfall ist die von den Messaufnehmern gelieferte Stellungsinformation kontinuierlich oder im Falle von digitaler Stellungsinformation, pseudo-kontinuierlich; mit anderen Worten: die Auflösung der Stellungsinformationen ist so hoch, dass sich ihr digitaler Charakter auf den Ablauf des Schaltvorgangs nicht auswirkt.

Um im Hinblick auf die zweite Aufgabe Schaltvorgänge einerseits exakt steuern und andererseits nach Bedarf reproduzieren zu können, ist bei einer äußeren Schaltung für ein Schaltgetriebe in einem Kraftfahrzeug mit einem in einem Schalt- und einem Wähl-Freiheitsgrad bewegbaren Schalt-Wählhebel, wobei Endstellungen des Schalt-Wählhebels in dem Schalt-Freiheitsgrad jeweils einem Gang des Schaltgetriebes entsprechen, Messaufnehmern zum Erfassen einer Bewegung des Schalt-Wählhebels in jedem Freiheitsgrad, einer an die Messaufnehmer gekoppelten elektronischen Steuereinheit und durch die Steuereinheit ansteuerbaren Getriebestellgliedern zum Antreiben einer Schaltbewegung in dem Schaltgetriebe die Steuereinheit zwischen wenigstens zweien der folgenden Betriebsmodi umschaltbar:
- einem proportionalen Betriebsmodus, in dem eine Sollposition der Getriebestellglieder eine Funktion der erfassten Stellung des Schalt-Wählhebels ist;
- einem Konstant-Kraftmodus, in welchem die Steuereinheit eine Schaltbewegung der Getriebestellglieder mit konstanter Kraft steuert, wenn erfasst wird, dass der Schalt-Wählhebel eine der Endstellungen erreicht hat;
- einem Kraft-Weg-Modus, in welchem die Steuereinheit eine Schaltbewegung der Getriebestellglieder mit einer als Funktion der aktuellen Stellung der Aktuatoren vorgegebenen Kraft steuert, wenn erfasst wird, dass der Schalt-Wählhebel eine der Endstellungen erreicht hat;
- einem Kraft-Zeit-Modus, in welchem die Steuereinheit eine Schaltbewegung der Getriebestellglieder mit einer als Funktion der Zeit vorgegebenen Kraft steuert, wenn erfasst wird, dass der Schalt-Wählhebel eine der Endstellungen erreicht hat; und
- einem Weg-Zeit-Modus, in welchem die Steuereinheit eine Schaltbewegung der Getriebestellglieder mit einer als Funktion der Zeit vorgegebenen Stellung der Getriebestellglieder steuert, wenn erfasst wird, dass der Schalt-Wählhebel eine der Endstellungen erreicht hat.

Während der proportionale Betriebsmodus eine variable, der vom Fahrer geführten Bewegung des Schalt-Wählhebels nachgebildete Schaltbewegung in dem Schaltgetriebe ermöglicht, bilden die anderen Modi jeweils in reproduzierbarer Weise einen vorgegebenen Ablauf des Schaltvorgangs nach. Dies ermöglicht zum einen, das Verhalten des Schaltgetriebes während eines Schaltvorgangs unter reproduzierbaren äußeren Bedingungen zu untersuchen und das Getriebe so anzupassen, dass es einen "glatten" Schaltvorgang unter diesen vorgegebenen Bedingungen ermöglicht; andererseits bieten diese reproduzierbaren Modi auch die Möglichkeit, anstelle von Schaltbewegungsabläufen, die nicht zuverlässig einen glatten Schaltvorgang ermöglichen, gezielt erprobte, zuverlässig funktionierende Schaltabläufe zu steuern. Mit anderen Worten: die reproduzierbaren Schaltmodi sind sowohl geeignet, um problematische Schaltvorgänge systematisch zu wiederholen und zu untersuchen, um letztlich das Schaltgetriebe an diese Schaltvorgänge anzupassen; andererseits ermöglichen sie eine Anpassung der Schaltabläufe an das Getriebe, indem selektiv nur solche Schaltabläufe durchgeführt werden, die zuverlässig glatt ablaufen, während andere unterdrückt werden.

Die oben beschriebenen Betriebsmodi der Steuereinheit können auch genutzt werden, um mit geringem Aufwand Schaltvorgänge auf einem Prüfstand (z.B. Fahrzeugdauerlauf, Getriebedauerlauf) nachzubilden.

In Anbetracht des Einflusses, den ein zu Beginn eines Schaltvorgangs auf den Antriebstrang wirksames Drehmoment auf den Ablauf eines Schaltvorgangs haben kann ist es zweckmäßig, dass die Steuereinheit an einen Drehmomentsensor zum Erfassen eines Drehmoments an einer Welle des Antriebsstrangs des Kraftfahrzeugs gekoppelt ist und eingerichtet ist, einen Schaltvorgang nur bei einem vorgegebenen Drehmoment an der Welle durchzuführen. Auch dies vereinfacht einerseits die Anpassung des Getriebes, indem die Möglichkeit geschaffen wird, Schaltvorgänge reproduzierbar mit dem vorgegebenen Drehmoment ablaufen zu lassen und zu untersuchen; andererseits ergibt sich die Möglichkeit, wenn wenigstens ein Drehmomentwert existiert, bei dem der Schaltvorgang zuverlässig abläuft, Schaltvorgänge bei allen anderen Drehmomentwerten zu unterdrücken, d.h. das Schalt-Drehmoment dem Getriebe anzupassen und nicht umgekehrt.

Insbesondere aber nicht ausschließlich um einen Schaltvorgang unter Berücksichtigung des auf den Antriebsstrang einwirkenden Drehmoments zu steuern, weist die äußere Schaltung vorzugsweise ein durch die Steuereinheit ansteuerbares Kupplungsstellglied zum Öffnen und Schließen einer Kupplung im Antriebsstrang des Kraftfahrzeugs auf.

Auch in Bezug auf dieses Kupplungsstellglied kann die Steuereinheit zwischen einem proportionalen Betriebsmodus, in dem eine Sollposition des Kupplungsstellgliedes eine Funktion der erfassten Stellung des Schalt-Wählhebels ist, und wenigstens einem reproduzierbaren Modus, insbesondere einem Weg-Zeit-Modus umschaltbar sein, in welchem die Steuereinheit eine Schaltbewegung des Kupplungsstellgliedes mit einer als Funktion der Zeit vorgegebenen Stellung des Kupplungsstellgliedes steuert, wenn erfasst wird, dass der Schalt-Wählhebel eine der Endstellungen erreicht hat.

Die erfindungsgemäße äußere Schaltung kann eingesetzt werden, um ein Schaltgetriebe zu optimieren, das später in einem Kraftfahrzeug mit einer herkömmlichen mechanischen äußeren Schaltung kombiniert wird; es kann aber auch in einem Kraftfahrzeug dauerhaft eingebaut sein, um eine shift-by-wire-Funktionalität zu implementieren.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung des Schaltsystems eines Kraftfahrzeugs mit einer erfindungsgemäßen äußeren Schaltung; und
- Fig. 2: eine Schaltkulisse des Schaltsystems und in Abhängigkeit von der Stellung eines Schalt-Wählhebels in der Schaltkulisse ausgegebene Stellungs-Messwerte von an dem Schalt-Wählhebel angeordneten Messaufnehmern.

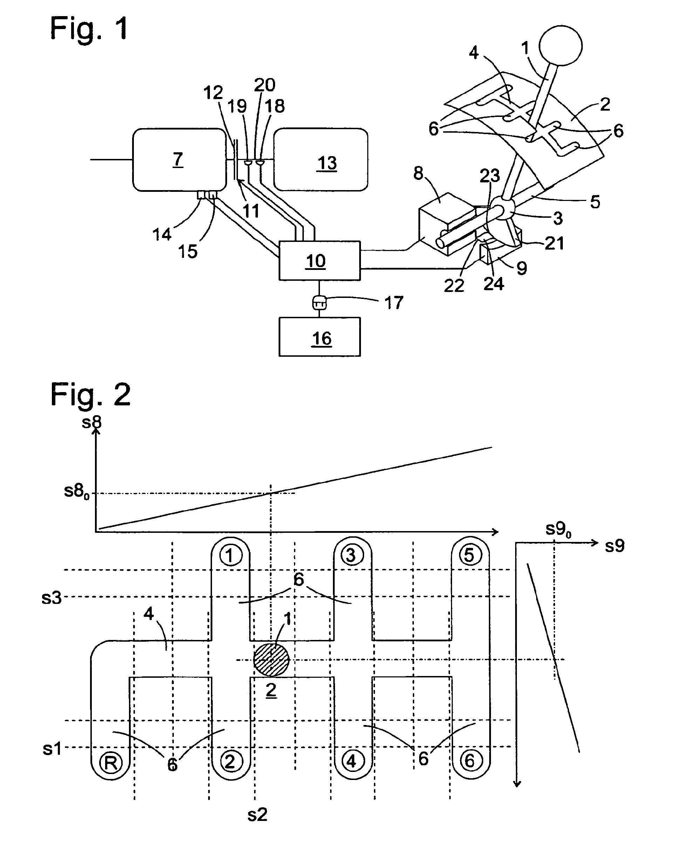

In der schematischen Darstellung der Fig. 1 ist ein Schalt-Wählhebel in der Fahrgastzelle eines Fahrzeugs mit 1, eine den Schalt-Wählhebel 1 führende Schaltkulisse mit 2 und ein Gelenk, in welchem der Schalt-Wählhebel 1 mit zwei Freiheitsgraden drehbar ist, mit 3 bezeichnet. Die Schaltkulisse 2 hat eine Wählgasse 4, die sich in einer Ebene erstreckt, die auf einer durch das Gelenk 3 verlaufenden Welle 5 senkrecht steht. Von der Wählgasse 4 zweigen Schaltgassen 6 rechtwinklig ab, deren jede einem von sechs Vorwärtsgängen bzw. einem Rückwärtsgang eines Stufengetriebes 7 zugeordnet ist. Die Welle 5 rotiert mit der Bewegung des Schalt-Wählhebels 1 entlang der Schaltgasse 6, und eine Drehstellung der Welle 5 wird von einem Winkelsensor 8 abgetastet. Ein zweiter Winkelsensor 9 dient zur Erfassung einer Drehbewegung des Schalt-Wählhebels 1 um ein zur Welle 5 senkrechte Achse, in eine der Schaltgassen 6 hinein bzw. aus ihr heraus.

Der Schalt-Wählhebel 1 ist nach unten über die Welle 5 hinaus durch einen Abschnitt 21 verlängert, der über eine elastische gewellte Kontur 22 streicht. In der in Fig. 1 gezeigten Stellung, mit dem Schalt-Wählhebel in der Wählgasse 4, berührt der Abschnitt 21 die elastische Kontur mittig; beiderseits des Abschnitts 21 erstrecken sich symmetrisch Schenkel der Kontur 22, von denen nur einer in Fig. 1 zu sehen ist. Der Eingriff des Abschnitts in eine mittlere Vertiefung 23 der Kontur 22 hält den Schalt-Wählhebel 1 stabil in der Wählgasse 4; um in eine Schaltgasse 2 einzurücken, muss der Abschnitt 21 die Kontur 22 elastisch zurückdrängen, bis er eine seitliche Vertiefung 24 erreicht, die den Schalt-Wählhebel 1 stabil in einer einem eingelegten Gang entsprechenden Stellung am Ende einer der Schaltgassen 2 hält. Aufgrund des Zusammenwirkens des Abschnitts 21 mit der Kontur 22 setzt der Schalt-Wählhebel 1 einer Schaltbewegung einen in Abhängigkeit von der Stellung des Schalt-Wählhebels 1 veränderliche Kraft entgegen, die vom Fahrer gefühlt wird und diesem im Laufe einer Schaltbewegung das Erreichen der Wählgasse oder eines Endbereichs einer Schaltgasse anzeigt.Selbstverständlich kann alternativ auch ein flexibler Abschnitt des Schalt-Wählhebels 1 mit einer starren, ortsfesten Kontur zusammenwirken, oder es kann eine Kontur mit dem Schalt-Wählhebel 1 bewegbar verbunden sein, die bei einer Schaltbewegung von einer ortfesten Spitze abgetastet wird.

Eine Steuerschaltung 10 ist mit den beiden Winkelsensoren 8, 9, einem Stellglied 11 zum Öffnen und Schließen einer Kupplung 12 zwischen dem Stufengetriebe 7 und einem Motor 13 sowie mit Stellgliedern 14, 15 zum Antreiben einer Schalt- bzw. Wählbewegung in dem Stufengetriebe 7 verbunden. Den Stellgliedern 11, 14, 15 ist jeweils ein nicht dargestellter Messaufnehmer zugeordnet, über den die Steuerschaltung 10 eine Rückmeldung über die momentane Stellung des betreffenden Stellglieds 11, 14 bzw. 15 und die momentane Leistungsaufnahme des betreffenden Stellgliedes empfängt. Die Leistungsaufnahme der Stellglieder kann alternativ auch an anderer Stelle gemessen werden, z. B. in der Steuerschaltung (insbesondere anhand der den Stellgliedern zugeführten Stromstärke und Spannung) oder im Getriebe 7.

Eine Benutzerschnittstelle 16 ist lösbar, z.B. über einen Steckverbinder 17, mit der Steuerschaltung 10 verbunden, um die Arbeitsweise der letzteren festzulegen. So ermöglicht die Schnittstelle 16 insbesondere das Umschalten der Steuerschaltung 10 zwischen einer Mehrzahl verschiedener Arbeitsmodi. Als Schnittstelle 16 kann insbesondere ein üblicher Mikrocomputer dienen, der einem Benutzer, insbesondere einem Ingenieur bei Optimieren des Getriebes 7, die Auswahl des Arbeitsmodus sowie ggf. von Randbedingungen für einen Schaltvorgang ermöglicht.

Ein erster dieser Arbeitsmodi ist ein sog. proportionaler Modus, in welchem die Steuerschaltung 10 eine Sollstellung der beiden Stellglieder 14, 15 jeweils linear proportional zu einer vom Winkelsensor 8 bzw. 9 erfassten Drehstellung des Schalt-Wählhebels 1 festlegt. In dem proportionalen Betriebsmodus verhält sich die Steuerschaltung 10 als ein PI- oder PID-Regler, der als Sollgrößen für die Stellung der Stellglieder 14, 15 jeweils die von den Sensoren 8, 9 erfassten Winkel verwendet. Die Geschwindigkeit, mit der die Steuerschaltung 10 die Stellung der Stellglieder 14, 15 ihren jeweiligen Sollstellungen nachführt, ist eine lineare Funktion der Differenz zwischen aktueller Stellung und Sollstellung sowie des Zeitintegrals dieser Differenz (im Falle eines PI-Reglers), sowie zuzüglich noch der Zeitableitung dieser Differenz (im Falle eines PID-Reglers). Eine Folge des PI- oder PID-Regelprinzips ist, dass, wenn der Fahrer den Schalt-Wählhebel 1 bewegt, die Stellglieder 14, 15 jeweils mit einer gewissen Verzögerung der Bewegung des Schalt-Wählhebels folgen. Da aber die Geschwindigkeit mit der sie dies tun, direkt mit der Geschwindigkeit zusammenhängt, mit der Fahrer den Schalt-Wählhebel 1 bewegt, wird im Inneren des Stufengetriebes 7 eine Schaltbewegung gesteuert, die ein getreues Abbild der Bewegung des Schalt-Wählhebels ist. Obwohl die Steuerschaltung 10 ein Shift-by-Wire-System implementiert, kann der Fahrer den Schaltvorgang somit ähnlich feinfühlig und flexibel steuern wie im Falle einer rein mechanischen äußeren Schaltung.

Die Winkelsensoren 8, 9 können analoge Messaufnehmer wie z.B. Potentiometer sein, die ein in Abhängigkeit von der Stellung des Schalt-Wählhebels 1 kontinuierlich variables Signal liefern, genauso wie die Messaufnehmer der Stellglieder 14, 15. Wenn die Steuerschaltung 10 als programmierbare digitale Schaltung implementiert ist, liefern zweckmäßigerweise auch die Winkelsensoren 8, 9 digitale Messwerte. Der digitale Charakter der Messwerte bringt es mit sich, dass die Differenz zwischen Soll- und Istwerten der Stellungen der Stellglieder 14, 15 ständig geringfügig schwanken, auch wenn der Schalt-Wählhebel 1 und die Stellglieder 14, 15 mit gleichmäßiger Geschwindigkeit bewegt werden. Die Ortsauflösung der Winkelsensoren 8, 9 und der Messaufnehmer an den Stellgliedern 14, 15 ist jeweils unter Berücksichtigung der Filterkonstanten des PI- oder PID-Reglers so gewählt, dass bei einer gleichmäßigen Bewegung des Schalt-Wählhebels 1 die Geschwindigkeit, mit der das Stellglied 14 oder 15 dem Schalt-Wählhebel 1 nachgeführt wird, nicht merklich variiert.

Die Steuerschaltung 10 ist ausgelegt, um die zeitliche Abfolge der während eines Schaltvorgangs von den Winkelsensoren 8, 9 gelieferten Messsignale und/oder den daraus resultierenden Ablauf von an die Stellglieder 14, 15 gesendeten Steuersignalen aufzuzeichnen und zur Speicherung an die Benutzerschnittstelle 16 auszugeben. Gemeinsam mit diesen Daten kann jeweils eine von einem Drehzahlsensor 18 an der Abtriebswelle 20 des Motors 13 erfasste Drehzahl und/oder ein an dieser Welle 20 durch einen Drehmomentsensor 19 erfasstes Drehmoment in einem Speicher der Steuerschaltung 10 gespeichert oder zur Speicherung an die Nutzerschnittstelle 16 übergeben werden. Die erwähnten Daten können auch ganz oder teilweise aus fahrzeugeigenen Steuergeräten, z.B. einem an sich bekannten Motorsteuergerät, abgefragt werden. Die so erhaltenen Daten werden in einem der im Folgenden beschriebenen "reproduzierbaren Betriebsmodi" genutzt.

Eine erste Nutzungsmöglichkeit ist, wenn der Fahrer am Schalt-Wählhebel 1 erneut einen Schaltvorgang zwischen den Gängen, für die die Daten erhalten wurden, vornimmt, den Motor 13 so anzusteuern, dass die gespeicherten Drehzahl- und Drehmomentwerte wieder erhalten werden, und anschließend den Schaltvorgang zu wiederholen. Auf diese Weise können unbefriedigend abgelaufene Schaltvorgänge nach Bedarf exakt reproduziert werden, um die Ursache des unbefriedigenden Ablaufs ermitteln und beseitigen zu können. Wenn das Getriebe in dieser Art gründlich optimiert ist, kann es in einem in Serie gefertigten Fahrzeug mit einer herkömmlichen manuellen äußeren Schaltung kombiniert werden, ohne dass die Gefahr eines unbefriedigenden Schaltvorgangs besteht.

Eine andere Nutzungsmöglichkeit ist, wenn im proportionalen Betriebsmodus Werte der Drehzahl und des Drehmoments gefunden worden sind, bei denen ein Schaltvorgang zuverlässig glatt abläuft, diese Werte der Drehzahl und des Drehmoments als Randbedingungen für das Schalten vorzugeben, d.h. den Schaltvorgang nur durchzuführen, wenn die Randbedingungen erfüllt sind. Auf diese Weise ist ein sicheres, glattes Schalten auch mit einem Stufengetriebe 7 möglich, das nicht bei allen praktisch relevanten Werten der Drehzahl und des Drehmoments einen glatten Schaltvorgang gewährleistet.

Es gibt diverse Möglichkeiten, einen "reproduzierbaren" Betriebsmodus zu implementieren. Erfindungsgemäß kommen insbesondere in Betracht:
ein Konstantkraftmodus, in welchem die Steuereinheit 10 eine Schaltbewegung der Getriebestellglieder mit konstanter Kraft steuert. Ein solcher Betriebsmodus berücksichtigt automatisch einen wechselnden Schaltwiderstand des Getriebes, z.B. aufgrund unterschiedlicher Öltemperaturen, durch einen schnelleren bzw. langsameren Ablauf des Schaltvorgangs;
ein Kraft-Weg-Modus, in welchem die Steuereinheit 10 eine Schaltbewegung der Getriebestellglieder 14, 15 mit einer als Funktion der gegenwärtigen Stellung der Stellglieder 14, 15 vorgegebenen Kraft steuert. Ein solcher Modus ist im Grunde eine weiter entwickelte Variante des Konstantkraftmodus, die berücksichtigt, dass der Schaltwiderstand des Getriebes auf dem von den Stellgliedern 14, 15 zurückzulegenden Weg nicht überall konstant ist;
ein Kraft-Zeit-Modus, in welchem die Steuereinheit 10 eine Schaltbewegung der Getriebestellglieder 14, 15 mit einer als Funktion der Zeit vorgegebenen Kraft steuert. Ein solcher Modus kann z.B. zweckmäßig sein, wenn ein Schaltwiderstand des Getriebes von zeitlich variablen Größen wie z.B. dem Abklingen einer mit Beginn eines Schaltvorgangs angelegten Schwingung abhängig ist;
ein Weg-Zeit-Modus, in welchem die Steuereinheit 10 eine Schaltbewegung der Getriebestellglieder 14, 15 mit einer als Funktion der Zeit vorgegebenen Stellung der Getriebestellglieder 14, 15 steuert. Dieser Modus zwingt dem Stufengetriebe 7 einen exakt wiederholbaren Ablauf der Schaltbewegung auf, unabhängig von zufällig oder aus anderen Gründen variierenden Schaltwiderständen.

Indem ein einmal im proportionalen Betriebsmodus aufgezeichneter Bewegungsablauf in unterschiedlichen reproduzierbaren Modi wiederholt und beobachtet wird, kann auf mögliche Ursachen einer Störung des Schaltablaufs geschlossen werden.

Indem Schaltvorgänge bei unterschiedlichen Werten von Randbedingungen wie etwa der Drehzahl oder des Drehmoments systematisch wiederholt und untersucht werden, können die Gründe für eine Störung des Schaltablaufs bei bestimmten Werten dieser Randbedingungen ermittelt und beseitigt werden. Durch diesen Optimierungsprozess wird auf einfachem Wege ein Schaltgetriebe erhalten, das in einem Kraftfahrzeug, gesteuert über eine einfache mechanische äußere Schaltung, zuverlässig funktioniert.

Umgekehrt kann eine äußere Schaltung, die die oben beschriebene Steuerschaltung 10 verwendet, mit minimalen Aufwand an ein existierendes Stufengetriebe 7 angepasst und mit diesem in ein Kraftfahrzeug integriert werden, da es im Prinzip genügt, für jede Kombination von Gängen, zwischen denen geschaltet werden soll, einen Satz von Randbedingungen und/oder einen Ablauf der Bewegung der Stellglieder 14, 15 in einem der reproduzierbaren Modi zu ermitteln, die ein glattes Schalten gewährleisten, und diese Randbedingungen bzw. diesen Bewegungsablauf bei jedem Schaltvorgang zu reproduzieren. Da ungünstige Kombinationen von Randbedingungen und Bewegungsabläufen auf diese Weise schlicht unterdrückt werden, kann eine Optimierung des Getriebes 7 für diese Fälle unterbleiben.

Fig. 2 zeigt eine Draufsicht auf die Schaltkulisse 2 mit Wählgasse 4 und Schaltgassen 6 und den darin beweglichen Schalt-Wählhebel 1 sowie oberhalb und rechts von der Schaltkulise 2 jeweils Diagramme, die Ausgabewerte s8, s9 der Winkelsensoren 8, 9 als lineare Funktion der Position des Schalt-Wählhebels 1 zeigen. So entsprechen z.B. der gezeigten Stellung des Schalt-Wählhebels 1 Sensor-Ausgabedaten s8₀, s9₀. Im proportionalen Betriebsmodus ordnet die Steuerschaltung 10 jeder möglichen Stellung des Schalt-Wählhebels 1 eine Sollstellung der Stellglieder 11, 14, 15 zu und steuert diese an, d.h. während sich der Schalt-Wählhebel 1 von einem einem Gang entsprechenden Ende einer Schaltgasse 6 weg bewegt, steuert die Steuerschaltung 10 zunächst das Öffnen der Kupplung 12 sowie über das Stellglied 14 eine Schaltbewegung des Getriebes 7. Während einer Bewegung des Schalt-Wählhebels 1 in der Wählgasse wird eine Wählbewegung des Stellgliedes 15 gesteuert, und schließlich, bei erneuten Einrücken in eine Schaltgasse 6, wieder eine Schaltbewegung des Stellglieds 14 und ein Schließen der Kupplung 12. In den reproduzierbaren Modi hingegen genügt es, zu erfassen, dass der Schalt-Wählhebel 1 bestimmte Schwellen passiert. So wird z. B. bei einem Schalten von zweiten in den dritten Gang zunächst erfasst, dass der Schalt-Wählhebel 1 eine Schwelle s1 der Schaltgassen passiert und dann das Öffnen der Kupplung und die Schaltbewegung des Stellgliedes 14 je nach zuvor ausgewähltem Modus mit zeit- oder wegabhängig vorgegebener Kraft oder Geschwindigkeit durchgeführt, nach Überqueren einer Schwelle s2 der Wählgasse setzt eine entsprechende Steuerung der Wählbewegung ein, und schließlich löst die Überquerung einer Schwelle s3 eine Schaltbewegung in den dritten Gang und das Schließen der Kupplung 12 aus. Alternativ sind auch Schaltabläufe denkbar, in denen die Steuerschaltung aus dem ursprünglichen Gang (hier dem zweiten) und der anhand der überquerten Schwelle erkannten Richtung der Wählbewegung des Schalt-Wählhebels 1 folgert, dass als nächstes der nächsthöhere oder -niedrigere Gang (hier der dritte) einzulegen ist und ab Überquerung der Schwelle s2 der Wählgasse den Schaltvorgang bis hin zum Schließen der Kupplung und Einlegen des neuen Gangs nach einem vorgegebenen Muster gemäß einem der reproduzierbaren Modi ausführt.

Um dem Fahrer eine fühlbare Rückkopplung über den Ablauf eines Schaltvorgangs zu liefern, kann alternativ zu der Kontur 22 auch eine in Fig. 1 nicht gezeigte, für sich allein an sich bekannte formschlüssige mechanische Verbindung vom Schalt-Wählhebel 1 zum Getriebe 7 vorgesehen sein, über die der Fahrer eine die Stellglieder 14, 15 unterstützende Schaltkraft auf das Getriebe 7 ausübt.

Eine vergleichbare Rückkopplung ist auch mit einer (in Fig. 1 nicht dargestellten) Bremse erreichbar, die am Schalt-Wählhebel 1 angeordnet ist, um dessen Schaltbewegung einen von der Steuerschaltung 10 gesteuerten Widerstand entgegenzusetzen. Dieser Widerstand kann eine Funktion allein der Stellung des Schalt-Wählhebels 1 sein, es kann aber auch die momentane Leistung der Stellglieder 14, 15 während eines Schaltvorgangs in den Widerstand mit einfließen, so dass ein veränderter Schaltwiderstand des Getriebes 7 sich im Schaltwiderstand des Schalt-Wählhebels 1 widerspiegelt und der Fahrer somit auch Änderungen im Schaltverhalten des Getriebes 1 erfühlen kann.

### Bezugszeichenliste

- 1: Schalt-Wählhebel
- 2: Schaltkulisse
- 3: Gelenk
- 4: Wählgasse
- 5: Welle
- 6: Schaltgasse
- 7: Stufengetriebe
- 8: Winkelsensor (Wähl-)
- 9: Winkelsensor (Schalt-)
- 10: Steuerschaltung
- 11: Stellglied
- 12: Kupplung
- 13: Motor
- 14: Stellglied
- 15: Stellglied
- 16: Benutzerschnittstelle
- 17: Steckverbinder
- 18: Drehzahlsensor
- 19: Drehmomentsensor
- 20: Abtriebswelle
- 21: Abschnitt
- 22: Kontur
- 23: Vertiefung
- 24: Vertiefung

## Patentansprüche

1. Äußere Schaltung für ein Schaltgetriebe (7) in einem Kraftfahrzeug, wobei die äußere Schaltung folgendes umfasst:
- einen in einem Schalt- und einem Wähl-Freiheitsgrad bewegbaren Schalt-Wählhebel (1), wobei Endstellungen des Schalt-Wählhebels (1) in dem Schalt-Freiheitsgrad jeweils einem Gang des Schaltgetriebes (7) entsprechen,
- Messaufnehmer (8, 9) zum Erfassen einer Bewegung des Schalt-Wählhebels (1) in jedem Freiheitsgrad,
- eine an die Messaufnehmer (8, 9) gekoppelte elektronische Steuereinheit (10) und durch die Steuereinheit (10) ansteuerbare Getriebestellglieder (14, 15) zum Antreiben einer Schaltbewegung in dem Schaltgetriebe (7),
**dadurch gekennzeichnet, dass** die Steuereinheit (10) eingerichtet ist, anhand von von den Messaufnehmern (8, 9) gelieferter, für die Stellung des Schalt-Wählhebels (1) repräsentativer Stellungsinformationen (s8, s9) wenigstens in dem Schalt-Freiheitsgrad eine Vielzahl von Zwischenstellungen des Schalt-Wählhebels (1) voneinander und von den Endstellungen zu unterscheiden und eine Sollposition der Getriebestellglieder (14, 15) jeweils entsprechend jeder Zwischenstellung festzulegen.

2. Äußere Schaltung nach Anspruch 1, **dadurch gekennzeichnet, dass** die Stellungsinformation (s8, s9) kontinuierlich oder pseudo-kontinuierlich ist.

3. Äußere Schaltung nach einem der vorhergehenden Ansprüche, **dadurch gekennzeichnet, dass** die Steuereinheit (10) an einen Drehmomentsensor (19) zum Erfassen eines Drehmoments an einer Welle (20) des Antriebsstrangs des Kraftfahrzeugs gekoppelt ist und eingerichtet ist, einen Schaltvorgang nur bei einem vorgegebenen Drehmoment an der Welle (20) durchzuführen.

4. Äußere Schaltung nach einem der vorhergehenden Ansprüche, **dadurch gekennzeichnet, dass** sie ein durch die Steuereinheit (10) ansteuerbares Kupplungsstellglied (11) zum Öffnen und Schließen einer Kupplung (12) im Antriebsstrang des Kraftfahrzeugs umfasst.

5. Äußere Schaltung nach Anspruch 4, **dadurch gekennzeichnet, dass** die Steuereinheit (10) zwischen wenigstens zweien der folgenden Betriebsmodi umschaltbar ist:
- einem proportionalen Betriebsmodus, in dem eine Sollposition des Kupplungsstellgliedes (11) eine Funktion der erfassten Stellung des Schalt-Wählhebels (1) ist,
- einem Konstantkraft-Modus, in welchem die Steuereinheit (10) eine Schaltbewegung des Kupplungsstellgliedes (11) mit konstanter Kraft steuert, wenn erfasst wird, dass der Schalt-Wählhebel (1) eine Referenzstellung (s1, s3) erreicht hat;
- einem Kraft-Weg-Modus, in welchem die Steuereinheit (10) eine Schaltbewegung des Kupplungsstellgliedes (11) mit einer als Funktion der gegenwärtigen Stellung der Getriebestellglieder (14, 15) vorgegebenen Kraft steuert, wenn erfasst wird, dass der Schalt-Wählhebel (1) eine Referenzstellung (s1, s3)erreicht hat;
- einem Kraft-Zeit-Modus, in welchem die Steuereinheit (10) eine Schaltbewegung des Kupplungsstellgliedes (11) mit einer als Funktion der Zeit vorgegebenen Kraft steuert, wenn erfasst wird, dass der Schalt-Wählhebel (1) eine Referenzstellung (s1, s3) erreicht hat;
- einem Weg-Zeit-Modus, in welchem die Steuereinheit (10) eine Schaltbewegung des Kupplungsstellgliedes (11) mit einer als Funktion der Zeit vorgegebenen Stellung des Kupplungsstellgliedes (11) steuert, wenn erfasst wird, dass der Schalt-Wählhebel (1) eine Referenzstellung (s1, s3) erreicht hat.

6. Äußere Schaltung für ein Schaltgetriebe (7) in einem Kraftfahrzeug, wobei die äußere Schaltung folgendes umfasst:
- einen in einem Schalt- und einem Wähl-Freiheitsgrad bewegbaren Schalt-Wählhebel (1), wobei Endstellungen des Schalt-Wählhebels (1) in dem Schalt-Freiheitsgrad jeweils einem Gang des Schaltgetriebes (7) entsprechen,
- Messaufnehmer (8, 9) zum Erfassen einer Bewegung des Schalt-Wählhebels (1) in jedem Freiheitsgrad,
- eine an die Messaufnehmer (8, 9) gekoppelte elektronische Steuereinheit (10) und durch die Steuereinheit (10) ansteuerbare Getriebestellglieder (14, 15) zum Antreiben einer Schaltbewegung in dem Schaltgetriebe (7),
**dadurch gekennzeichnet, dass** die Steuereinheit (10) zwischen wenigstens zweien der folgenden Betriebsmodi umschaltbar ist:
- einem proportionalen Betriebsmodus, in dem eine Sollposition der Getriebestellglieder (14, 15) eine Funktion der erfassten Stellung des Schalt-Wählhebels (1) ist,
- einem Konstantkraft-Modus, in welchem die Steuereinheit (10) eine Schaltbewegung der Getriebestellglieder mit konstanter Kraft steuert, wenn erfasst wird, dass der Schalt-Wählhebel (1) eine Referenzstellung (s1, s2, s3) erreicht hat;
- einem Kraft-Weg-Modus, in welchem die Steuereinheit (10) eine Schaltbewegung der Getriebestellglieder (14, 15) mit einer als Funktion der gegenwärtigen Stellung der Getriebestellglieder (14, 15) vorgegebenen Kraft steuert, wenn erfasst wird, dass der Schalt-Wählhebel (1) eine Referenzstellung (s1, s2, s3)erreicht hat;
- einem Kraft-Zeit-Modus, in welchem die Steuereinheit (10) eine Schaltbewegung der Getriebestellglieder (14, 15) mit einer als Funktion der Zeit vorgegebenen Kraft steuert, wenn erfasst wird, dass der Schalt-Wählhebel (1) eine Referenzstellung (s1, s2, s3) erreicht hat;
- einem Weg-Zeit-Modus, in welchem die Steuereinheit (10) eine Schaltbewegung der Getriebestellglieder (14, 15) mit einer als Funktion der Zeit vorgegebenen Stellung der Getriebestellglieder (14, 15) steuert, wenn erfasst wird, dass der Schalt-Wählhebel (1) eine Referenzstellung (s1, s2, s3) erreicht hat.

7. Äußere Schaltung nach Anspruch 6, **dadurch gekennzeichnet, dass** die Steuereinheit (10) an einen Drehmomentsensor (19) zum Erfassen eines Drehmoments an einer Welle (20) des Antriebsstrangs des Kraftfahrzeugs gekoppelt ist und eingerichtet ist, einen Schaltvorgang nur bei einem vorgegebenen Drehmoment an der Welle (20) durchzuführen.

8. Äußere Schaltung nach Anspruch 7 oder Anspruch 8, **dadurch gekennzeichnet, dass** sie ein durch die Steuereinheit (10) ansteuerbares Kupplungsstellglied (11) zum Öffnen und Schließen einer Kupplung (12) im Antriebsstrang des Kraftfahrzeugs umfasst.

9. Verwendung einer äußeren Schaltung nach einem der vorhergehenden Ansprüche zur Vornahme einer Schaltbewegung eines Schaltgetriebes (7), das später in einem Kraftfahrzeug mit einer mechanischen äußeren Schaltung kombiniert wird.

## Claims

1. An external shifting unit for a manual transmission (7) in a motor vehicle, wherein the external shifting unit comprises the following:
- a gear selection lever (1) which is movable within a shifting degree of freedom and a selection degree of freedom, wherein the end positions of the gear selection lever (1) in the shifting degree of freedom respectively correspond to a gear of the manual transmission (7);
- a measuring sensor (8, 9) for detecting a movement of the gear selection lever (1) in any degree of freedom;
- an electronic control unit (10) coupled to the measuring sensor (8, 9), and gear actuating elements (14, 15) which can be triggered by the control unit (10) for driving a shifting movement in the manual transmission (7),
**characterized in that** the control unit (10) is configured to differentiate a plurality of intermediate positions of the gear selection lever (1) from each other and from the end positions on the basis of positional information (s8, s9) at least in the shifting degree of freedom, which positional information (s8, s9) is supplied by the measuring sensors (8, 9) and is representative of the position of the gear selection lever (8, 9), and to determine a target position of the gear actuating elements (14, 15) according to each intermediate position.

2. An external shifting unit according to claim 1, **characterized in that** the positional information (s8, s9) is continuous or pseudo-continuous.

3. An external shifting unit according to one of the preceding claims, **characterized in that** the control unit (10) is coupled to a torque sensor (19) for detecting a torque on a shaft (20) of the drive train of the motor vehicle, and is set up to perform a shifting process only at a predetermined torque on the shaft (20).

4. An external shifting unit according to one of the preceding claims, **characterized in that** it comprises a clutch actuating element (11) which can be triggered by the control unit (10) for opening and closing a clutch (12) in the drive train of the motor vehicle.

5. An external shifting unit according to claim 4, **characterized in that** the control unit (10) can be switched between at least two of the following operating modes:
- a proportional operating mode in which a target position of the clutch actuating element (11) is a function of the detected position of the gear selection lever (1);
- a constant-force mode in which the control unit (10) controls a switching movement of the clutch actuating element (11) with constant force, when it is detected that the gear selection lever (1) has reached a reference position (s1, s3);
- a load displacement mode in which the control unit (10) controls a switching movement of the clutch actuating element (11) with a force predetermined as a function of the current position of the gear actuating elements (14, 15), when it is detected that the gear selection lever (1) has reached a reference position (s1, s3);
- a load displacement mode in which the control unit (10) controls a switching movement of the clutch actuating element (11) with a force predetermined as a function of time, when it is detected that the gear selection lever (1) has reached a reference position (s1, s3);
- a load displacement mode in which the control unit (10) controls a switching movement of the clutch actuating element (11) with a position of the clutch actuating element (11) which is predetermined as a function of time, when it is detected that the gear selection lever (1) has reached a reference position (s1, s3).

6. An external shifting unit for a manual transmission (7) in a motor vehicle, wherein the external shifting unit comprises the following:
- a gear selection lever (1) which is movable within a shifting degree of freedom and a selection degree of freedom, wherein the end positions of the gear selection lever (1) in the shifting degree of freedom respectively correspond to a gear of the manual transmission (7);
- a measuring sensor (8, 9) for detecting a movement of the gear selection lever (1) in any degree of freedom;
- an electronic control unit (10) coupled to the measuring sensor (8, 9), and gear actuating elements (14, 15) which can be triggered by the control unit (10) for driving a shifting movement in the manual transmission (7), **characterized in that** the control unit (10) can be switched between at least two of the following operating modes:
- a proportional operating mode in which a target position of the gear actuating elements (14, 15) is a function of the detected position of the gear selection lever (1);
- a constant-force mode in which the control unit (10) controls a switching movement of the gear actuating elements with constant force, when it is detected that the gear selection lever (1) has reached a reference position (s1, s2, s3);
- a load displacement mode in which the control unit (10) controls a switching movement of the gear actuating elements (14, 15) with a force predetermined as a function of the current position of the gear actuating elements (14, 15), when it is detected that the gear selection lever (1) has reached a reference position (s1, s2, s3);
- a load displacement mode in which the control unit (10) controls a switching movement of the gear actuating elements (14, 15) with a force predetermined as a function of time, when it is detected that the gear selection lever (1) has reached a reference position (s1, s2, s3);
- a load displacement mode in which the control unit (10) controls a switching movement of the gear actuating elements (14, 15) with a position of the gear actuating elements (14, 15) which is predetermined as a function of time, when it is detected that the gear selection lever (1) has reached a reference position (s1, s2, s3).

7. An external shifting unit according to claim 6, **characterized in that** the control unit (10) is coupled to a torque sensor (19) for detecting a torque on a shaft (20) of the drive train of the motor vehicle and is set up to perform a shifting process only at a predetermined torque on the shaft (20).

8. An external shifting unit according to claim 7 or claim 8, **characterized in that** it comprises a clutch actuating element (11) which can be triggered by the control unit (10) for opening and closing a clutch (12) in the drive train of the motor vehicle.

9. The use of an external shifting unit according to one of the preceding claims for carrying out a shifting movement of a manual transmission (7), which is combined at a later time in a motor vehicle with an external mechanical shifting unit.

## Revendications

1. Engrenage commutable externe pour une boîte de vitesses (7) dans un véhicule à moteur, lequel engrenage commutable externe comprend :
- un levier de sélection de rapport (1) mobile selon un degré de liberté de commutation et un autre de sélection, les positions de fin de course du levier de sélection de rapport (1) selon le degré de liberté de commutation correspondant chacune à une vitesse de la boîte de vitesses (7),
- des capteurs de mesure (8, 9) pour capter un mouvement du levier de sélection de rapport (1) dans chaque degré de liberté,
- une unité de commande électronique (10) couplée aux capteurs de mesure (8, 9) et des organes d'actionnement d'engrenages (14, 15) pouvant être commandés par l'unité de commande (10) pour entraîner un mouvement de changement de rapport dans la boîte de vitesses (7),
**caractérisé en ce que** l'unité de commande (10) est conçue pour différencier à l'aide d'informations de position (s8, s9) fournies par les capteurs de mesure (8, 9) et représentatives de la position du levier de sélection de rapport (1), au moins dans le degré de liberté de changement de rapport, plusieurs positions intermédiaires du levier de sélection de rapport (1), les unes par rapport aux autres et par rapport aux positions de fin de course, et déterminer une position de consigne des organes d'actionnement d'engrenages (14, 15) correspondant à chaque position intermédiaire.

2. Engrenage commutable externe selon la revendication 1, **caractérisé en ce que** l'information de position (s8, s9) est continue ou pseudo-continue.

3. Engrenage commutable externe selon l'une des revendications précédentes, **caractérisé en ce que** l'unité de commande (10) est couplée à un capteur de couple de rotation (19) destiné à capter un couple sur un arbre (20) de la chaîne de transmission du véhicule à moteur et équipée pour n'exécuter un changement de rapport qu'à un couple prédéfini sur l'arbre (20).

4. Engrenage commutable externe selon l'une des revendications précédentes, **caractérisé en ce qu'**il comprend un organe d'actionnement de l'embrayage (11) pouvant être actionné par l'unité de commande (10) pour ouvrir et fermer un embrayage (12) dans la chaîne de transmission du véhicule à moteur.

5. Engrenage commutable externe selon la revendication 4, **caractérisé en ce que** l'unité de commande (10) peut commuter entre au moins deux des modes de fonctionnement suivants :
- un mode proportionnel, dans lequel une position de consigne de l'organe d'actionnement de l'embrayage (11) est fonction de la position captée du levier de sélection de rapport (1) ;
- un mode à force constante, dans lequel l'unité de commande (10) commande un mouvement de commutation de l'organe d'actionnement de l'embrayage (11) avec une force constante quand elle détecte que le levier de sélection de rapport (1) a atteint une position de référence (s1, s3) ;
- un mode force-distance, dans lequel l'unité de commande (10) commande un mouvement de commutation de l'organe d'actionnement de l'embrayage (11) avec une force prédéterminée en fonction de la position actuelle des organes d'actionnement d'engrenages (14, 15) quand elle détecte que le levier de sélection de rapport (1) a atteint une position de référence (s1, s3) ;
- un mode force-temps, dans lequel l'unité de commande (10) commande un mouvement de commutation de l'organe d'actionnement de l'embrayage (11) avec une force prédéterminée en fonction du temps quand elle détecte que le levier de sélection de rapport (1) a atteint une position de référence (s1, s3) ;
- un mode distance-temps, dans lequel l'unité de commande (10) commande un mouvement de commutation de l'organe d'actionnement de l'embrayage (11) avec une position prédéterminée en fonction du temps de l'organe d'actionnement de l'embrayage (11) quand elle détecte que le levier de sélection de rapport (1) a atteint une position de référence (s1, s3).

6. Engrenage commutable externe pour boîte de vitesses (7) dans un véhicule à moteur, lequel engrenage commutable externe comprend :
- un levier de sélection de rapport (1) mobile selon un degré de liberté de commutation et un autre de sélection, les positions de fin de course du levier de sélection de rapport (1) selon le degré de liberté de commutation correspondant chacune à une vitesse de la boîte de vitesses (7),
- des capteurs de mesure (8, 9) pour capter un mouvement du levier de sélection de rapport (1) dans chaque degré de liberté,
- une unité de commande électronique (10) couplée aux capteurs de mesure (8, 9) et des organes d'actionnement d'engrenages (14, 15) pouvant être commandés par l'unité de commande (10) pour entraîner un mouvement de changement de rapport dans la boîte de vitesses (7),
**caractérisé en ce que** l'unité de commande (10) peut commuter entre au moins deux des modes de fonctionnement suivants :
- un mode proportionnel, dans lequel une position de consigne des organes d'actionnement d'engrenages (14, 15) est fonction de la position captée du levier de sélection de rapport (1) ;
- un mode à force constante, dans lequel l'unité de commande (10) commande un mouvement de commutation des organes d'actionnement de l'embrayage avec une force constante quand elle détecte que le levier de sélection de rapport (1) a atteint une position de référence (s1, s2, s3) ;
- un mode force-distance, dans lequel l'unité de commande (10) commande un mouvement de commutation des organes d'actionnement d'engrenages (14, 15) avec une force prédéterminée en fonction de la position actuelle des organes d'actionnement d'engrenages (14, 15) quand elle détecte que le levier de sélection de rapport (1) a atteint une position de référence (s1, s2, s3) ;
- un mode force-temps, dans lequel l'unité de commande (10) commande un mouvement de commutation des organes d'actionnement d'engrenages (14, 15) avec une force prédéterminée en fonction du temps quand elle détecte que le levier de sélection de rapport (1) a atteint une position de référence (s1, s2, s3) ;
- un mode distance-temps, dans lequel l'unité de commande (10) commande un mouvement de commutation des organes d'actionnement d'engrenages (14, 15) avec une position prédéterminée en fonction du temps des organes d'actionnement d'engrenages (14, 15) quand elle détecte que le levier de sélection de rapport (1) a atteint une position de référence (s1, s2, s3).

7. Engrenage commutable externe selon la revendication 6, **caractérisé en ce que** l'unité de commande (10) est couplée à un capteur de couple de rotation (19) pour capter un couple de rotation sur un arbre (20) de la chaîne de transmissions du véhicule à moteur et équipée pour n'exécuter un changement de rapport qu'à un couple prédéterminé sur l'arbre (20).

8. Engrenage commutable externe selon la revendication 7 ou la revendication 8, **caractérisé en ce qu'**il comprend un organe d'actionnement de l'embrayage (11) pouvant être actionné par l'unité de commande (10) pour ouvrir et fermer un embrayage (12) dans la chaîne de transmission du véhicule à moteur.

9. Utilisation d'un engrenage commutable externe selon l'une des revendications précédentes pour la réalisation d'un mouvement de commutation d'une boîte de vitesses (7), qui est combinée par la suite dans un véhicule à moteur avec un engrenage commutable externe mécanique.
